# EUROPEAN PATENT APPLICATION

(11) **EP 4 750 025 A1**
(43) Date of publication of application: **27.05.2026**
(21) Application number: 25209042.8
(22) Date of filing: 16.10.2025
(51) Int. Cl.: H04L 47/11, H04L 47/12, H04L 47/22, H04L 47/10, H04L 47/31, H04L 47/32

(54) **FLOW BASED POLICING FOR CONTROL PLANE PROTECTION**

(30) Priority: 22.11.2024 US 202418956562
(71) Applicant: Arista Networks, Inc., Santa Clara, CA 95054 (US)
(72) Inventor: Subramanya, Sachin, Santa Clara, CA, 95054 (US); Kulkarni, Milind, Santa Clara, CA, 95054 (US); Venati, Suneel, Santa Clara, CA, 95054 (US); Gahlot, Digvijay, Santa Clara, CA, 95054 (US); Labonte, Francois, Santa Clara, CA, 95054 (US)
(74) Representative: Hoffmann Eitle

(57) **Abstract**

A method of operating a network device is provided that includes receiving control packets, identifying a first policer index for the control packets, generating a flow key for the control packets, and identifying a flow rate limit for the control packets based on a second policer index obtained from the first policer index and the flow key. The method can further include obtaining a policer result by determining whether a flow rate of the control packets exceeds the flow rate limit and then either forwarding the control packets to a control plane of the network device or dropping the control packets based on the policer result. Multiple policer stages can optionally be employed.

## Description

This application claims priority to U.S. patent application No. 18/956,562, filed November 22, 2024, which is hereby incorporated by reference herein in its entirety.

### Background

A communication system can include multiple network devices that are interconnected to form a network for conveying packets from a source device to a destination device. Routing information indicating the route through which the packets are to be conveyed from the source device to the destination device can be shared amongst peer network devices using networking protocols such as Border Gateway Protocol (BGP), Link Aggregation Control Protocol (LACP), or Open Shortest Path First (OSPF) protocol.

Consider a scenario in which a network device is operable to receive packets from other network devices. The network device can include a central processing unit (CPU) and a component that limits the rate for CPU-bound packets from the various peer network devices. Such control plane traffic protection in network devices is critical for the stability of the overall network. A rogue host or network device connected to the network device can send a large amount of control plane traffic that can overwhelm the memory buffers as well as the processing capability of the network device. This can result in denial of service (DoS) to genuine hosts sending critical control plane traffic to the network device. It is within such context that the embodiments herein arise.

### Brief Description of the Drawings

FIG. 1 is a diagram of an illustrative system having one or more network devices in accordance with some embodiments.
FIG. 2 is a diagram of an illustrative network device having one or more subsystems configured to provide flow-based control plane protection in accordance with some embodiments.
FIG. 3 is a diagram of an illustrative protocol classifier configured to map various networking protocols to corresponding base policer indices in accordance with some embodiments.
FIG. 4 is a diagram of an illustrative policer database that can be addressed by a policer index in accordance with some embodiments.
FIG. 5 is a diagram of a flowchart of illustrative steps for operating a network device of the type shown in connection with FIGS. 1-4 in accordance with some embodiments.
FIG. 6 is a diagram showing multiple flow policer stages configured to increase flow segregation in accordance with some embodiments.
FIG. 7 is a diagram showing illustrative hardware components within a data processing system in accordance with some embodiments.

### Detailed Description

A network device such as a switch or router may receive control packets from one or more neighboring network devices. The network device can include one or more processors, including a packet processor and a central processing unit (CPU). To prevent a rogue or malicious host from overwhelming the network device, the packet processor can include a packet forwarding subsystem, a flow key generator, a policer database, a packet marker, and a packet forwarding decision block. The packet forwarding subsystem can be configured to receive incoming packets and can, using an embedded protocol classifier, determine a corresponding base policer index based on a networking protocol employed by the incoming packets. The flow key generator can be configured to receive the incoming packets and to generate a corresponding flow key based on the contents of the packets and/or associated packet metadata. The base policer index can be merged (concatenated or combined) with the flow key to obtain a policer index. The policer index can be used to look up an entry in the policer database.

The policer database can include one or more policer components configured to determine whether the incoming packets violate a rate limit threshold specified in the entry corresponding to the policer index. If the current flow of incoming packets is below the rate limit threshold, then the packets can be labeled, using the packet marker, with a first (green) marker. If the current flow of incoming packets exceeds the rate limit threshold, then the packets can be labeled, using the packet marker, with a second (red) marker. Packets labeled with the green marker can be forwarded to the CPU for downstream processing, whereas packets labeled with the red marker can be dropped in the packet processor, without being forwarded to the CPU. If desired, multiple policer stages can be chained to reduce the probability of flow collision. A network device configured and operated in this way can be technically advantageous and beneficial to provide more efficient and higher resolution control plane protection by targeting one or more flows.

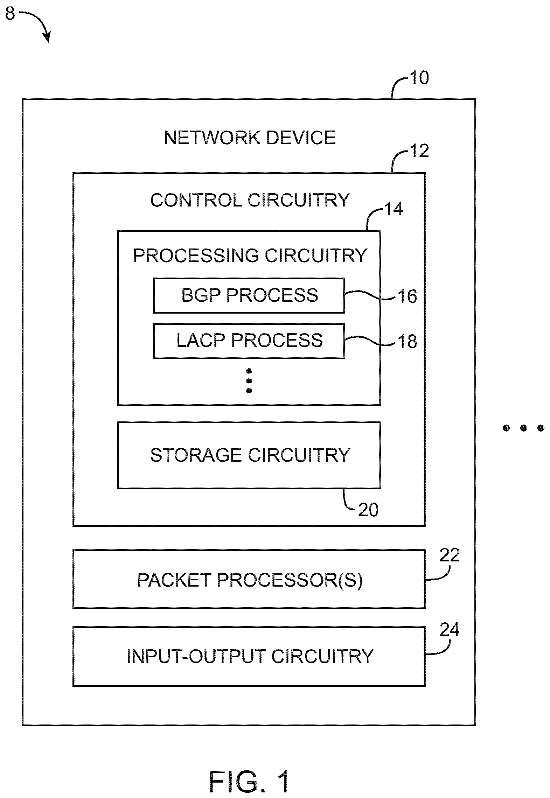

An illustrative networking system configured to provide such flow-based policing is shown in FIG. 1. As shown in FIG. 1, networking system 8 may include one or more network devices 10. Each network device 10 in system 8 may be a switch (e.g., a multi-layer L2/L3 switch), a router or gateway, a bridge, a hub, a repeater, a firewall, a wireless access point, a device serving other networking functions, a device that includes a combination of these functions, or other types of network devices. Multiple such network devices having the same or different networking functions in system 8 may be present and interconnected to form a communications network that processes and/or forwards traffic (e.g., data and control packets) between end hosts.

The communications network may be implemented with any suitable scope (e.g., as a wide area network, including one or more campus area networks or including one or more local area networks, etc.). If desired, the communications network may include internet service provider networks (e.g., the Internet) or other public service provider networks, private service provider networks (e.g., multiprotocol label switching (MPLS) networks), and/or may include other types of networks such as telecommunication service provider networks (e.g., a long-term evolution (LTE) network).

As shown in FIG. 1, network device 10 may include control circuitry 12, one or more packet processor(s) 22, and input-output circuitry 24 disposed within a housing of network device 10. Control circuitry 12 may include processing circuitry 14 and storage circuitry 20. The housing of network device 10 may include an exterior cover (e.g., a plastic exterior shell, a metal exterior shell, or an exterior shell formed from other rigid or semirigid materials) that provides structural support and protection for the components of network device 10 disposed within the housing.

Processing circuitry 14 may include one or more processors or processing units based on central processing units (CPUs), graphics processing units (GPUs), microprocessors, general-purpose processors, host processors, microcontrollers, digital signal processors, programmable logic devices such as a field programmable gate array device (FPGA), application specific system processors (ASSPs), application specific integrated circuit (ASIC) processors, and/or other types of processors. Processing circuitry 14 may run (execute) a network device operating system and/or other software/firmware that is stored on storage circuitry 20.

Storage circuitry 20 may include non-transitory (tangible) computer readable storage media configured to store the operating system software and/or any other software code, sometimes referred to as program instructions, software, data, instructions, or code. As an example, the operations described herein for selectively delaying routes as well as other network device data plane functions may be stored as (software) instructions on the non-transitory computer-readable storage media (e.g., in portion(s) of storage circuitry 20 in network device 10). The corresponding processing circuitry (e.g., one or more processors of processing circuitry 14 in network device 10) may process or execute the respective instructions to perform the corresponding operations. Storage circuitry 20 may be implemented using non-volatile memory (e.g., flash memory or other electrically-programmable read-only memory configured to form a solid-state drive), volatile memory (e.g., static or dynamic random-access memory), hard disk drive storage, and/or other storage circuitry. Storage circuitry 20 is therefore sometimes referred to as memory circuitry. Processing circuitry 14 and memory circuitry 20 as described above may sometimes be referred to collectively as control circuitry 12 implementing a "control plane" of network device 10.

In particular, processing circuitry 14 may execute control plane software such as operating system software, routing policy management software, routing protocol agents or processes (e.g., Border Gateway Protocol or "BGP" processes such as an active BGP process 16, Link Aggregation Control Protocol or "LACP" processes such as an active LACP process 18, etc.), and other software, may be used to support the operation of protocol clients and/or servers, may be used to support the operation of packet processor(s) 22, may store packet forwarding information, may execute packet processing software, and/or may execute other software instructions that control the functions of network device 10 and the other components therein.

While processing circuitry 14 is shown in FIG. 1 as executing one or more BGP and LACP processes, processing circuitry 14 may also execute one or more other network routing protocol agents or processes. As examples, any network processes such as network protocol agents may implement the Spanning Tree Protocol (STP), Multiple Spanning Tree Protocol (MSTP), Open Shortest Path First (OSPF) protocol, Enhanced Interior Gateway Routing Protocol (EIGRP), Virtual Router Redundancy Protocol (VRRP), Hot Standby Router Protocol (HSRP), VLAN Trunking Protocol (VTP), Intermediate System to Intermediate System (IS-IS) protocol, Virtual Extensible LAN (VXLAN) protocol, Bidirectional Forwarding Detection (BFD) protocol, Address Resolution Protocol (ARP), Internet Group Management Protocol (IGMP), non-BGP distance vector routing protocols, Protocol Independent Multicast (PIM) protocols, Resource Reservation Protocol (RSVP), Link Layer Discovery Protocol (LLDP), Two-Way Active Measurement Protocol (TWAMP), Precision Time Protocol (PTP), Connectivity Fault Management (CFM) protocol, Exterior Gateway Protocol (EGP), Routing Information Protocol (RIP), Label Distribution Protocol (LDP), Multiprotocol Label Switching (MPLS), and/or other Internet routing protocols (just to name a few).

Packet processor(s) 22 may be used to implement a data plane or forwarding plane of network device 10. Packet processor(s) 22 may include one or more processors or processing units based on central processing units (CPUs), graphics processing units (GPUs), microprocessors, general-purpose processors, host processors, microcontrollers, digital signal processors, programmable logic devices such as a field programmable gate array device (FPGA), application specific system processors (ASSPs), application specific integrated circuit (ASIC) processors, and/or other processor architectures.

Packet processor 22 may receive incoming packets via input-output circuitry 24 (e.g., ports), parse and analyze the received packets, process the packets based on packet forwarding decision data (e.g., in a forwarding information base) and/or in accordance with a network protocol, and forward (or drop) the packet accordingly. The packet forwarding decision data may be stored on a portion of memory circuitry 20 and/or other storage circuitry integrated as part of or separate from packet processor 22. Input-output circuitry 24 may include communication interface components such as one or more Bluetooth interface, Wi-Fi interface, Ethernet interface, optical interface, and/or other wired or wireless network interfaces for connecting network device 10 to the Internet, a local area network, a wide area network, a mobile network, other types of networks, and/or to another network device, peripheral devices, and/or other electronic equipment. Network device 10 may also include other components such as a system bus or connector(s) that couple the components of network device 10 to one another, power management components, thermal management components, etc.

In general, packet processor 22 can receive and forward packets at very high data rates (e.g., in the Terabit(s) range), whereas processing circuitry 14 (e.g., the control plane CPU) can only receive and transmit packets in the Gigabit(s) range. This difference in the processing capabilities between packet processor 22 and CPU 14 means that a malicious host or a temporary loop in the network can quickly overwhelm the packet receiving interface of CPU 14 in a network device 10. This example in which network device 10 is described as having a packet processor 22 and a separate CPU is illustrative. In general, network device 10 can include two or more processors. In yet other embodiments, packet processor 22 and CPU 14 can optionally be implemented as part of a single processing unit or system on a chip (SoC).

In accordance with an embodiment, network device 10 can include one or more subsystems (e.g., hardware and/or software subsystems) configured to provide control plane protection on a flow-based level per protocol from neighboring network devices. The techniques described herein can enhance the control plane traffic protection within a given protocol across different flows. Rate limiting or policing different flows within a class of control plane traffic can effectively prevent a rogue host from hogging the memory buffers and bandwidth allocated to that class of traffic. The term "class" when describing control plane traffic (e.g., traffic being conveyed from packet processor 20 to the control plane CPU 14) can refer to control plane traffic employing the same networking protocol.

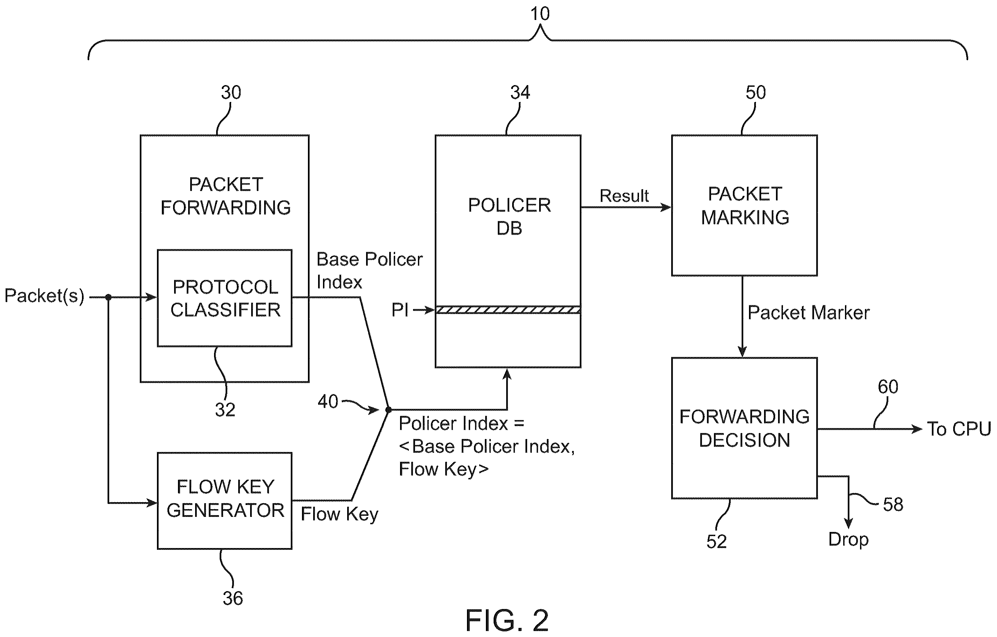

FIG. 2 is a diagram of an illustrative network device 10 having one or more subsystems configured to provide flow-based control plane protection in accordance with some embodiments. At least some or all of the various subsystems shown in FIG. 2 can be considered part of a packet processor (see, e.g., packet processor 22 of FIG. 1) or other component in the data forwarding plane. As shown in FIG. 2, network device 10 may include a packet forwarding subsystem such as packet forwarding subsystem 30, a key generation subsystem such as flow key generator 36, a flow policing subsystem such as policer database 34, a packet marking subsystem such as packet marking subsystem 50, and a packet forwarding decision subsystem such as forwarding decision circuit 52.

A protocol classifier such as protocol classifier 32 can be implemented as part of packet forwarding subsystem 30. Protocol classifier 32 can be configured to receive one or more incoming (ingress) control packets and to determine or identify the particular networking protocol that is currently being employed by the incoming control packets. Packet forwarding subsystem 30 can be implemented as content-addressable memory such as ternary content-address memory (TCAM) or other types of memory for matching data. A "control packet" can refer to and be defined here in as a packet that includes information for managing and controlling network behavior, establishing network connections, and/or providing status reports. Control packets can include control information such as routing information, error information, acknowledgements, and flow control information. Unlike "data" packets, control packets might not include any user data (e.g., control packets can be devoid of user-generated content).

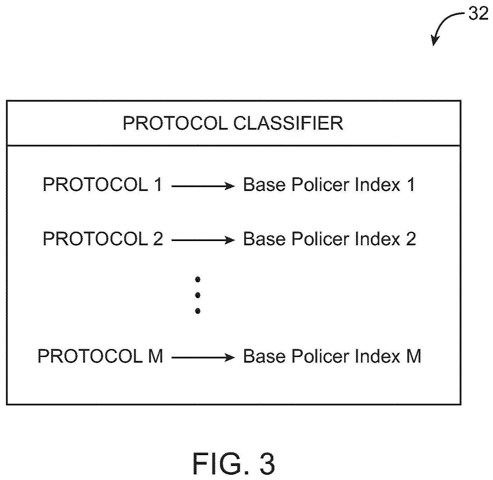

FIG. 3 is a diagram of an illustrative protocol classifier 32, which can be further configured to map various networking protocols to corresponding base policer indices. For instance, protocol classifier 32 can receive first incoming packets, determine that the first packets are transmitted in accordance with a first networking protocol (e.g., BGP), and then assign a corresponding first base policer index to the first packets. In another instance, protocol classifier 32 can receive second incoming packets, determine that the second packets are transmitted in accordance with a second networking protocol (e.g., LACP), and then assign a corresponding second base policer index to the second packets. In yet another instance, protocol classifier 32 can receive third incoming packets, determine that the third packets are transmitted in accordance with a third networking protocol (e.g., STP), and then assign a corresponding third base policer index to the third packets. These examples are illustrative.

In general, protocol classifier 32 can assign up to M different base policer indices, where M is an integer equal to 2, 3, 4, 5, 5-10, 10-20, 20-50, 50-100, or greater than 100. The M different base policer indices can be encoded using a ceiling of log₂(M) bits. Configured in this way, packets transmitted using different networking protocols (i.e., different classes of data traffic) that are being received at network device 10 can be assigned different base policer indices by protocol classifier 32. In other words, all control traffic using the same networking protocol can be assigned the same base policer index (e.g., the same class of network traffic can be mapped to the same base policer index). The term "base" policer index can thus refer to an index assigned or mapped by protocol classifier 32 based at least partially or solely on the networking protocol employed by the incoming packets. Referring back to FIG. 2, protocol classifier 32 may produce a base policer index as its output.

Flow key generator 36 can be configured to receive one or more incoming control packets and to generate a corresponding flow key for the incoming packets. Flow key generator 36 can be configured to compute the flow key based on the contents or one or more fields of the control packets and any associated packet metadata such as an associated incoming source (port) interface. For example, flow key generator 36 can be configured to compute a hash over the packet header (e.g., over one or more media access control or "MAC" addresses, one or more Internet Protocol or "IP" addresses, one or more port/interface numbers, protocol information, and/or other header information). In general, packet data can refer to and be defined herein as any information about the packet(s) that help describe its characteristics and is not necessarily restricted to the contents of the packet header itself. Packet data can include the packet header fields and/or additional data that may not be in the header itself, such as timestamp information of the packet(s), packet size (length), VLAN tags, sequence numbers, acknowledgement numbers, time to live (TTL), source/destination IP addresses, checksum, control flags, etc. In contrast, packet "metadata" can refer to information separate from an associated packet. Computed in this way, all control packets using the same networking protocol and/or intended for the same destination may result in the same flow key (e.g., packets with the same headers will be mapped to the same flow key). A flow key produced by flow key generator 36 in this way is thus sometimes referred to as a "hash" key.

The flow key output from flow key generator 36 can be combined with the corresponding base policer index output from protocol classifier 32 (see, e.g., at merging point 40). In particular, the base policer index can be concatenated with the associated flow key to produce a policer index. In the example of FIG. 2, the most significant bits (MSBs) of the policer index can be occupied by the base policer index, whereas the least significant bits (LSBs) of the policer index can be occupied by the flow key. This ordering of bits is exemplary. In other embodiments, the combined (concatenated) policer index can have the base policer index as LSBs and the flow/hash key as MSBs. In general, the number of bits of the base policer index can be different than the number of bits of the flow key. As an example, the number of bits of the base policer index can be greater than the number of bits in the flow key. As another example, the number of bits of the base policer index can be less than the number of bits in the flow key.

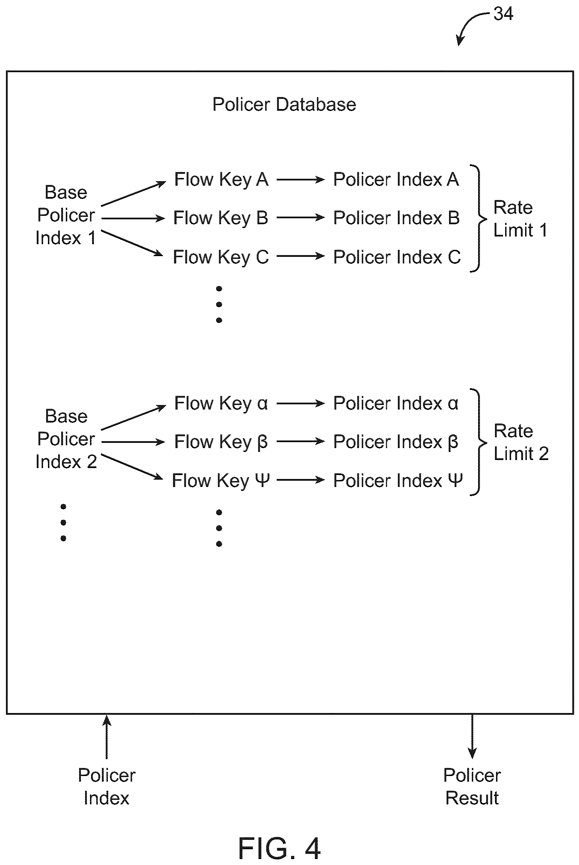

The policer index (PI) can be used to identify a corresponding entry in policer database 34. FIG. 4 is a diagram of illustrative policer database 34 that can be addressed by a policer index in accordance with some embodiments. As shown in FIG. 4, policer indices that include a first base policer index but different associated flow keys (see, e.g., flow keys A, B, C, etc.) can be mapped to policer indices A, B, and C, respectively, which can all be mapped to a first rate limit, sometimes referred to as a first rate limit threshold, a first flow rate limit, or a first policer commit rate. As another example, policer indices that include a second base policer index but different associated flow keys (see, e.g., flow keys α, β, ψ, etc.) can be mapped to policer indices α, β, and ψ, respectively, which can all be mapped to a second rate limit, sometimes referred to as a second rate limit threshold, a second flow rate limit, or a second policer commit rate. The first (1) base policer index and the second (2) base policer index (and optionally other base policer indices) associated with policer database 34 may be equal. The second rate limit can be different than or equal to the first rate limit. The example of FIG. 4 in which policer database 34 is configured to map a policer index to at least two different flow rate limits is illustrative. In general, policer database 34 can be configured to map a received policer index to any number of rate limit values, where the number of rate limit values can be equal to at least the total number of base policer indices (see, e.g., integer M in the example of FIG. 3). Policer database 34 is thus sometimes referred to as a policer rate lookup table (LUT).

The incoming packets can exhibit a current flow rate that is monitored using policer database 34 or other flow rate monitoring subsystem within the packet processor. Policer database 34 can further be configured to compare the current flow rate of the incoming packets to the rate limit threshold identified (looked up) by the policer index. In embodiments where policer database 34 is configured to monitor the flow rate of the control packets and to determine whether the flow rate of the control packets exceeds the flow rate limit, policer database 34 can be referred to more generically as a "policer" or a flow policer. For example, policer database 34 can output a first policer result when the current flow rate of the incoming packets remains below the identified rate limit threshold level and can output a second policer result, different than the first policer result, when the current flow rate of the incoming packets exceeds the identified rate limit threshold level. As an example, the first policer result can be represented by a logic '0' (low) signal, whereas the second policer result can be represented by a logic '1' (high) signal. Such an encoding scheme is exemplary. If desired, other ways of encoding the policer result output by policer database 34 can be employed.

Referring back to FIG. 2, policer database 34 can output the policer result to packet marking subsystem 50. Packet marking subsystem 50 can be configured to output a packet marker based on the received policer result. For example, packet marking subsystem 50 can be configured to output a first packet marker in response to receiving the first (low) policer result and can be configured to output a second packet marker, different than the first packet marker, in response to receiving the second (high) policer result. The first packet marker can be configured to label or otherwise "color" the incoming packets as green, whereas the second packet market can be configured to label or otherwise color the incoming packets as red. The use of the colors green and red as packet markers is merely illustrative. In general, packets transmitted under the flow rate limit can be marked using a first label or color, whereas packets violating the flow rate limit can be marked using a second label or color different than the first label or color. Device configurations in which non-rate-limit-violating traffic is labeled using "green" markers while rate-limit-violating traffic is labeled using "red" markers are sometimes described herein as an example.

Packet marking subsystem 50 can output the packet marker(s) to packet forwarding decision circuit 52. Forwarding decision circuit 52 can be configured to selectively drop the incoming packets based on the received packet markers. For example, forwarding decision circuit 52 can be configured to drop at least some or all of the incoming packets in response to receive a red marker from packet marking subsystem 50, as shown by arrow 58. Conversely, forwarding decision circuit 52 can be configured to forward the incoming packets to the control plane (e.g., to the CPU or other processing circuitry in the control plane, as shown by arrow 60) in response to receiving only green markers from packet marking subsystem 50, without receiving any red markers.

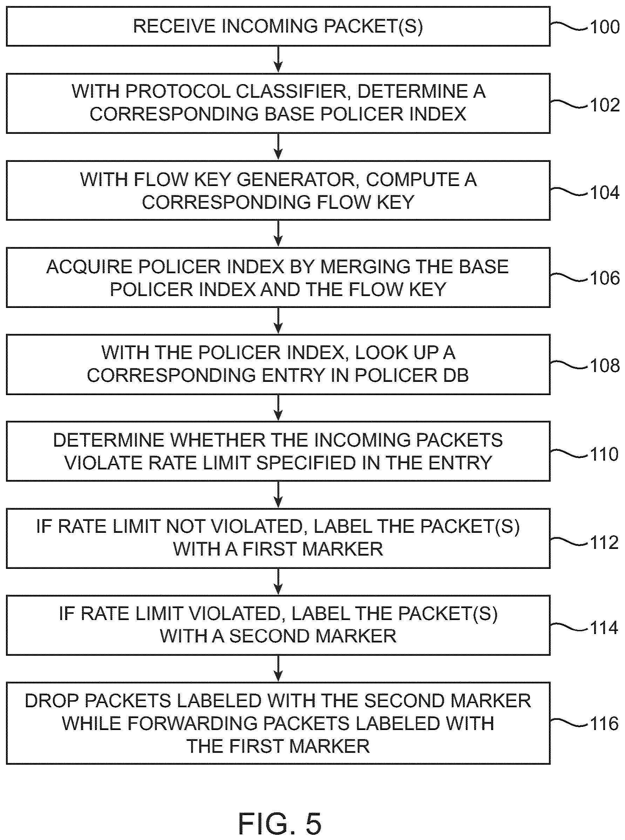

FIG. 5 is a diagram of a flowchart of illustrative steps for operating network device 10 of the type described in connection with FIGS. 1-4. During the operations of block 100, network device 10 can receive one or more incoming (ingress) packets. For example, network device 10 of FIG. 1 can receive packets from one or more neighboring network devices via one or more ports in input-output circuitry 24. Network device 10 can further be configured to determine whether the incoming packet(s) is a control packet or a data packet. For instance, network device 10 can examine information in the header fields of the incoming packets to determine whether the packets are control or data packets.

During the operations of block 102, network device 10 can be configured to determine a corresponding base policer index for incoming control packet(s). For example, protocol classifier 32 (see FIG. 2) within packet forwarding subsystem 30 can be configured to identify a base policer index based on the networking protocol that is being used to transmit the control packet(s). For example, protocol classifier 32 can examine protocol information in the header fields of the control packets to identify the networking protocol that is being used to transmit the control packets. Different networking protocols can be mapped to different respective base policer indices, as illustrated by the diagram of FIG. 3.

During the operations of block 104, network device 10 can be configured to compute a corresponding flow key. For example, flow key generator 36 can be configured to perform a hash function on the contents of the control packet(s) and/or associated packet metadata to generate the flow key. The flow key can represent a deterministic key that is fixed for a given flow.

During the operations of block 106, network device 10 can acquire a policer index by merging the base policer index obtained from block 102 and the flow key obtained from block 104. For example, the base policer index can be concatenated with the flow key to obtain the policer index. The policer index can thus sometimes be referred to herein as the combined policer index.

During the operations of block 108, network device 10 can be configured to look up a corresponding entry in policer database 34 using the policer index obtained from block 106. For example, the policer index can be used to identify a corresponding flow rate limit, as shown in the example of FIG. 4. Different policer indices can be mapped to different respective flow rate limits in the table within policer database 34.

During the operations of block 110, network device 10 can be configured to determine whether the incoming packet(s) violate the rate limit specified in the entry identified from block 108. For example, policer database 34 or other flow rate monitoring component within the packet processor can compare a current flow rate of incoming packets to the identified flow rate limit corresponding to the policer index.

In response to determining that the current flow rate of incoming control packets does not violate the flow rate limit, network device 10 can label the packets with a first marker (see operations of block 112). For example, policer database 34 may output a first policer result indicating that the current flow rate is below the flow rate limit, which can then trigger packet marking subsystem 50 to output a green packet marker or other label indicative of non-rate-limit-violating traffic to forwarding decision circuit 52.

On the other hand, in response to determining that the current flow rate of incoming control packets violates the flow rate limit, network device 10 can label the packets with a second marker that is different than the first marker (see operations of block 114). For example, policer database 34 may output a second policer result indicating that the current flow rate exceeds the flow rate limit, which can then trigger packet marking subsystem 50 to output a red packet marker or other label indicative of rate-limit-violating traffic to forwarding decision circuit 52. Although the operations of block 114 are shown as occurring after block 112, only the operations of one of blocks 112 and 114 should be performed in response to the determination in block 110. If block 112 is performed, then block 114 will be skipped. If block 114 is performed, then block 112 will be skipped.

The example described here for blocks 112 and 114 where the operations of block 112 are performed when the flow rate does not violate the flow rate limit and where the operations of block 114 are performed when the flow rate violates the flow rate limit is illustrative. In other embodiments, the operations of block 112 can be performed when the current flow rate is within a first range of flow rates while the operations of block 114 can be performed when the flow rate is within a second range of flow rates. The first and second ranges of flow rates should be nonoverlapping.

During the operations of block 116, network device 10 can selectively drop packets labeled with the second marker while forwarding packets labeled with the first marker to the control plane. For example, forwarding decision circuit 52 can have an input configured to receiving the incoming packet(s) and can further be configured to: drop or discard packets that are labeled with one or more red markers and forward packets that are labeled with one or more green markers to the CPU or other processing circuitry in the control plane. Operating a network device 10 in this way can be technically advantageous and beneficial to rate limit malicious flows without impacting other flows (e.g., to prevent a rogue flow from hogging the memory buffers and bandwidth allocated to a particular class of traffic).

The operations of FIG. 5 are illustrative. In some embodiments, one or more of the described operations may be modified, replaced, or omitted. In some embodiments, one or more of the described operations may be performed in parallel. In some embodiments, additional processes may be added or inserted between the described operations. If desired, the order of certain operations may be reversed or altered and/or the timing of the described operations may be adjusted so that they occur at slightly different times. In some embodiments, the described operations may be distributed in a larger system.

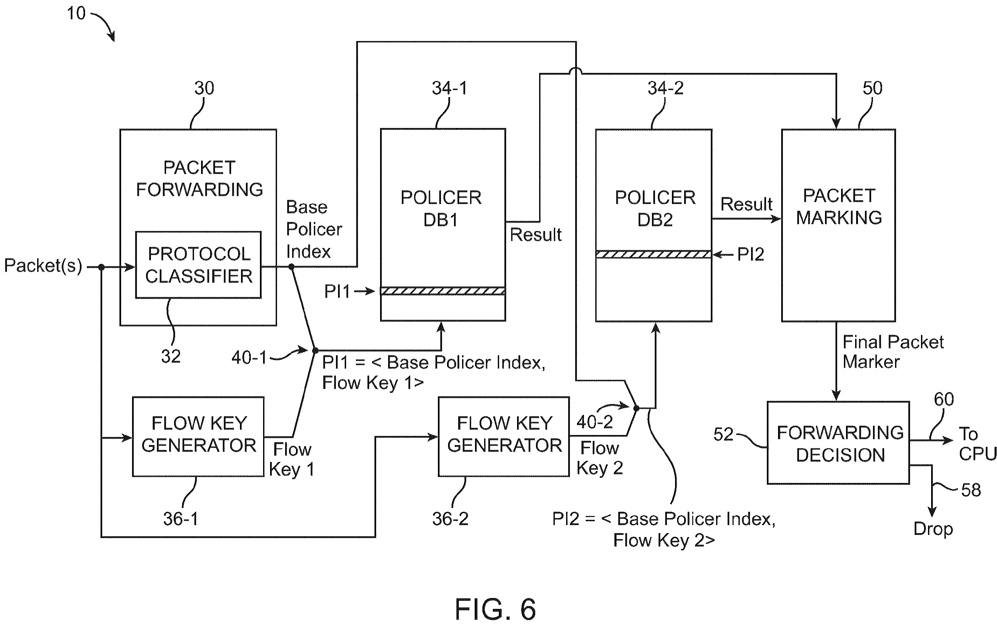

The embodiments described above in connection with FIGS. 2-5 that employ a single policer database 34 are illustrative and not intended to limit the scope of the present embodiments. FIG. 6 shows another embodiment of network device 10 that can include multiple policer databases. At least some or all of the various subsystems shown in FIG. 6 can be considered part of a packet processor (see, e.g., packet processor 22 of FIG. 1) or other component in the data forwarding plane. As shown in FIG. 6, network device 10 may include a packet forwarding subsystem such as packet forwarding subsystem 30, multiple key generation subsystems such as a first flow key generator 36-1 and a second flow key generator 36-2, multiple flow policing subsystems such as a first policer database 34-1 and a second policer database 34-2, a packet marking subsystem such as packet marking subsystem 50, and a packet forwarding decision subsystem such as forwarding decision circuit 52.

A protocol classifier such as protocol classifier 32 can be implemented as part of packet forwarding subsystem 30. Protocol classifier 32 can be configured to receive one or more incoming (ingress) control packets and to determine or identify the particular networking protocol that is currently being employed by the incoming packets. Packet forwarding subsystem 30 can be implemented as content-addressable memory such as ternary content-address memory (TCAM) or other types of memory for matching data. The structure and function of protocol classifier 32 in FIG. 6 may be identical to that already described in connection with FIGS. 2-3 and need not be reiterated now to avoid obscuring the present embodiment. Protocol classifier 32 may produce a base policer index as its output.

The first flow key generator 36-1 can be configured to receive one or more incoming control packets and to generate a first (1) flow key for the incoming packets. Flow key generator 36-1 can be configured to compute the first flow key based on the contents of the packets and any associated packet metadata. For example, flow key generator 36-1 can be configured to compute a hash over the packet header (e.g., over one or more media access control or "MAC" addresses, one or more Internet Protocol or "IP" addresses, one or more port/interface numbers, protocol information, and/or other header information). Computed in this way, all control packets using the same networking protocol and/or intended for the same destination may result in the same flow key (e.g., packets with the same headers will be mapped to the same flow key). A flow key produced by flow key generator 36-1 in this way is thus sometimes referred to as a "hash" key.

The first flow key output from flow key generator 36-1 can be merged with the corresponding base policer index output from protocol classifier 32 (see, e.g., at merging point 40-1). In particular, the base policer index can be concatenated/combined with the first flow key to produce a first policer index (see, e.g., "PI1"). In the example of FIG. 6, the most significant bits (MSBs) of the first policer index PI1 can be occupied by the base policer index, whereas the least significant bits (LSBs) of the policer index can be occupied by the first flow key. This ordering of bits is exemplary. In other embodiments, the combined (concatenated) policer index PI1 can have the base policer index as LSBs and the first flow/hash key as MSBs.

The first policer index (PI1) can be used to identify a corresponding entry in the first policer database 34-1. The structure and function of a policer database 34 are described above in connection with FIGS. 2, 4, and 5 and need not be reiterated here to avoid obscuring the present embodiment. The incoming packets can exhibit a current flow rate that is monitored using policer database 34-1 or other flow rate monitoring subsystem within the packet processor. Policer database 34-1 can further be configured to compare the current flow rate of the incoming packets to the rate limit threshold identified (looked up) by the first policer index PI1. In embodiments where policer database 34-1 is configured to monitor the flow rate of the packets and to determine whether the flow rate of the packets exceeds the flow rate limit identified using PI1, policer database 34-1 can be referred to more generically as a first "policer" or a first flow policer. For example, policer 34-1 can output a policer result having a first value when the current flow rate of the incoming packets remains below the rate limit threshold level identified using PI1 and can output a policer result having a second value, different than the first value, when the current flow rate of the incoming packets exceeds the identified rate limit threshold level.

Before, after, or concurrently (in parallel) with the first flow key generator 36-1 computing the first flow key, the second flow key generator 36-2 can be configured to receive one or more incoming control packets and to generate a second (1) flow key for the incoming packets. Flow key generator 36-2 can be configured to compute the second flow key based on the contents of the packets and any associated packet metadata. For example, flow key generator 36-2 can be configured to compute a hash over the packet header (e.g., over one or more media access control or "MAC" addresses, one or more Internet Protocol or "IP" addresses, one or more port/interface numbers, protocol information, and/or other header information). Computed in this way, all packets using the same networking protocol and/or intended for the same destination may result in the same flow key (e.g., packets with the same headers will be mapped to the same flow key). In particular, the second flow key computed by the second flow key generator 36-2 should be different than the first flow key output by the first flow key generator 36-1, even for the same set of incoming packets. In other words, packets having identical packet headers and/or metadata can result in different first and second flow keys output from flow key generators 36-1 and 36-2. This can, for example, be achieved by configuring flow key generators 36-1 and 36-2 to perform different hash functions. For instance, flow key generator 36-1 can perform a first hash function on a given control packet to produce a first flow key, whereas flow key generator 36-2 can perform a second hash function, different than the first hash function, on the (same) given control packet to produce a second flow key. Since the first and second hash functions are different, the second flow key will be different than the first flow key even for the same control packet. As examples, the first and second hash functions can be different by implementing different polynomials, initialization (seed) values, constraints, and/or algorithmic optimizations.

The second flow key output from flow key generator 36-2 can be merged with the same corresponding base policer index output from protocol classifier 32 (see, e.g., at merging point 40-2). In particular, the same base policer index that was used in producing PI1 can be concatenated/combined with the second flow key to produce a second policer index (see, e.g., "PI2"). In the example of FIG. 6, the most significant bits (MSBs) of the second policer index PI2 can be occupied by the base policer index, whereas the least significant bits (LSBs) of the policer index can be occupied by the second flow key. This ordering of bits is exemplary. In other embodiments, the combined (concatenated) policer index PI2 can have the base policer index as LSBs and the second flow/hash key as MSBs.

The second policer index (PI2) can be used to identify a corresponding entry in the second policer database 34-2. The structure and function of a policer database 34 are described above in connection with FIGS. 2, 4, and 5 and need not be reiterated here to avoid obscuring the present embodiment. The incoming packets can exhibit a current flow rate that is monitored using policer database 34-2 or other flow rate monitoring subsystem within the packet processor. Policer database 34-2 can further be configured to compare the current flow rate of the incoming packets to the rate limit threshold identified (looked up) by the second policer index PI2. In embodiments where policer database 34-2 is configured to monitor the flow rate of the packets and to determine whether the flow rate of the packets exceeds the flow rate limit identified using PI2, policer database 34-2 can be referred to more generically as a second "policer" or a second flow policer. For example, policer 34-2 can output a policer result having a first value when the current flow rate of the incoming packets is below the rate limit threshold level identified using PI2 and can output a policer result having a second value, different than the first value, when the current flow rate of the incoming packets exceeds the identified rate limit threshold level.

Policer database 34-1 can output a first policer result to packet marking subsystem 50, whereas policer database 34-2 can output a second policer result to packet marking subsystem 50. The first policer result output from first policer database 34-1 can have a first value (e.g., a logic high or "asserted" value) when the first policer database 34-1 determines that the monitored flow rate of the incoming packets is more than a first rate limit threshold identified by the first policer index PI1 or can have a second value (e.g., a logic low or "deasserted" value) when the first policer database 34-1 determines that the monitored flow rate of the incoming packets is less than the first rate limit threshold identified by index PI1. Separately, the second policer result output from second policer database 34-2 can have a first value (e.g., a logic high or "asserted" value) when the second policer database 34-2 determines that the monitored flow rate of the incoming packets is more than a second rate limit threshold identified by the second policer index PI2 or can have a second value (e.g., a logic low or "deasserted" value) when the second policer database 34-2 determines that the monitored flow rate of the incoming packets is less than the second rate limit threshold identified by index PI2.

Packet marking subsystem 50 can be configured to output a final packet marker based on the first and second policer results received from policer database 34-1 and policer database 34-2. For example, packet marking subsystem 50 can be configured to output a first (green) packet marker in response to receiving at least one deasserted policer result from the two policer databases (e.g., subsystem 50 will color the incoming packets as green if one or more of the first and second policer databases determines that the flow rate incoming packets is below the identified rate limit threshold). Conversely, packet marking subsystem 50 can be configured to output a second (red) packet marker in response to receiving asserted policer results from both policer databases (e.g., subsystem 50 will color the incoming packets as red only if both the first and second policer databases determine that the flow rate incoming packets is above the respective identified rate limit thresholds).

The use of the colors green and red as packet markers is merely illustrative. In general, packets transmitted under the flow rate limit can be marked using a first label or color, whereas packets violating the flow rate limit can be marked using a second label or color different than the first label or color. Device configurations in which non-rate-limit-violating traffic is labeled using "green" markers while rate-limit-violating traffic is labeled using "red" markers are sometimes described herein as an example.

Packet marking subsystem 50 can output the packet marker(s) to packet forwarding decision circuit 52. Forwarding decision circuit 52 can be configured to selectively drop the incoming packets based on the received packet markers. For example, forwarding decision circuit 52 can be configured to drop the incoming packets in response to receiving a red marker from packet marking subsystem 50, as shown by arrow 58. Conversely, forwarding decision circuit 52 can be configured to forward the incoming packets to the control plane (e.g., to the CPU or other processing circuitry in the control plane, as shown by arrow 60) in response to receiving only green markers from packet marking subsystem 50, without receiving any red markers.

Operating a network device 10 in this way can be technically advantageous and beneficial to rate limit malicious flows without impacting other flows (e.g., to prevent a rogue flow from hogging the memory buffers and bandwidth allocated to a particular class of traffic). Moreover, the use of multiple policer stages such as policer databases 34-1 and 34-2 with multiple flow key generators such as flow key generators 36-1 and 36-2 can provide further technical advantages and benefits by reducing the probability of packet collision. For example, if the flow key is N bits wide, then the probability of two flows colliding is equal to 1/2^N, assuming a single policer stage as shown in the embodiment of FIG. 2. With a dual policer stage arrangement as shown in the embodiment of FIG. 6, assuming each of the first and second flow keys is also N bits wide, then the probability of two flows colliding will be equal to 1/2^(2N), which is less than 1/2^N for the single policer stage arrangement. A multi-stage policer configuration thus provides a better separation of flows and can potentially better isolate malicious/rogue flows with a higher resolution.

The example of FIG. 6 in which network device 10 includes two policer stages (e.g., two policer databases 34 addressed using two different policer indices produced using a single protocol classifier 32 and two flow key generators 36) is illustrative and not intended to limit the scope of the present embodiments. As another example, device 10 can include three policer stages, where three separate policer databases 34 can be addressed using three different policer indices produced using a single protocol classifier 32 and three flow key generators 36. As another example, device 10 can include four policer stages, where four separate policer databases 34 can be addressed using four different policer indices produced using a single protocol classifier 32 and four flow key generators 36. In general, network device 10 can include any number of policer stages for jointly monitoring the flow rate of incoming packets.

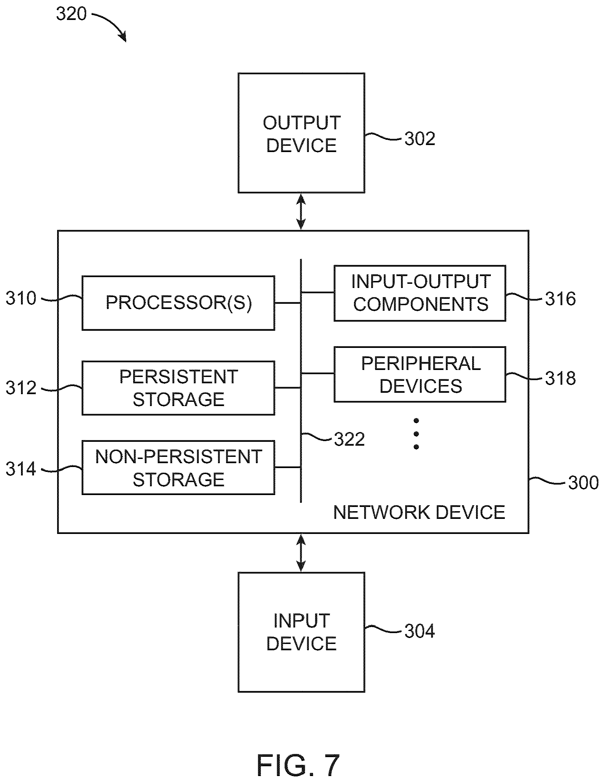

The foregoing embodiments may be made part of a larger system. FIG. 7 shows a system such as data processing system 320. Data processing system 320 may include a network device 300 optionally coupled to an input device 304 and/or an output device 302. Network device 300 may represent a network device 10 described in connection with the embodiments of FIGS. 1-6. Network device 300 may include one or more processors 310 (e.g., processing circuitry 14 of FIG. 1), storage circuitry such as persistent storage 312 (e.g., flash memory or other electrically-programmable read-only memory configured to form a solid-state drive, a hard disk drive, etc.), non-persistent storage 314 (e.g., volatile memory such as static or dynamic random-access memory, cache memory, etc.), or any suitable type of computer-readable media for storing data, software, program code, or instructions, input-output components 316 (e.g., communication interface components such as a Bluetooth^{®} interface, a Wi-Fi^{®} interface, an Ethernet interface, an optical interface, and/or other networking interfaces for connecting device 300 to the Internet, a local area network, a wide area network, a mobile network, other types of networks, and/or to another network device), peripheral devices 318, and/or other electronic components. These components can be coupled together via a system bus 322.

As an example, network device 300 can be part of a host device that is coupled to one or more output devices 302 and/or to one or more input devices 304. Input device(s) 304 may include one or more touchscreens, keyboards, mice, microphones, touchpads, electronic pens, joysticks, buttons, sensors, or any other type of input devices. Output device(s) 302 may include one or more displays, printers, speakers, status indicators, external storage, or any other type of output devices.

System 320 may be part of a digital system or a hybrid system that includes both digital and analog subsystems. System 320 may be used in a wide variety of applications as part of a larger computing system, which may include but is not limited to: a datacenter, a financial system, an e-commerce system, a web hosting system, a social media system, a healthcare/hospital system, a computer networking system, a data networking system, a digital signal processing system, an energy/utility management system, an industrial automation system, a supply chain management system, a customer relationship management system, a graphics processing system, a video processing system, a computer vision processing system, a cellular base station, a virtual reality or augmented reality system, a network functions virtualization platform, an artificial neural network, an autonomous driving system, a combination of at least some of these systems, and/or other suitable types of computing systems.

The methods and operations described above in connection with FIGS. 1-7 may be performed by the components of one or more network device(s) using software, firmware, and/or hardware (e.g., dedicated circuitry or hardware). Software code for performing these operations may be stored on non-transitory computer readable storage media (e.g., tangible computer readable storage media) stored on one or more of the components of the network device. The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of the network device (e.g., using processing circuitry 14 of FIG. 1).

In accordance with an embodiment, a method of operating a network device includes receiving control packets, identifying a first policer index for the control packets, generating a flow key for the control packets, and identifying a flow rate limit for the control packets based on a second policer index obtained from the first policer index and the flow key.

In accordance with another embodiment, identifying the first policer index for the control packets optionally includes identifying, with a protocol classifier, the first policer index for the control packets based on a networking protocol with which the control packets are being transmitted to the network device.

In accordance with another embodiment, generating the flow key for the control packets optionally includes generating, with a flow key generator, the flow key for the control packets based on contents of the control packets.

In accordance with another embodiment, generating the flow key for the control packets optionally includes generating, with a flow key generator, the flow key for the control packets based on contents of the control packets and additional metadata associated with the control packets.

In accordance with another embodiment, generating the flow key for the control packets optionally includes generating, with a flow key generator, the flow key for the control packets by performing a hash function on contents of the control packets.

In accordance with another embodiment, identifying the flow rate limit for the control packets based on the second policer index optionally includes obtaining the second policer index by combining the first policer index and the flow key.

In accordance with another embodiment, identifying the flow rate limit for the control packets based on the second policer index further optionally includes using the second policer index to look up, in a policer database, a corresponding entry specifying the flow rate limit for the control packets.

In accordance with another embodiment, the method optionally includes outputting, with the policer database, a result indicating whether a flow rate of the control packets exceeds the flow rate limit.

In accordance with another embodiment, the method optionally includes determining whether a flow rate of the control packets exceeds the flow rate limit and taking a first action on the control packets in response to determining that the flow rate of the control packets is less than the flow rate limit.

In accordance with another embodiment, the method optionally includes taking a second action on the control packets that is different than the first action in response to determining that the flow rate of the control packets exceeds the flow rate limit.

In accordance with another embodiment, the first action optionally includes labeling the control packets with a first marker, and the second action optionally includes labeling the control packets with a second marker different than the first marker.

In accordance with another embodiment, the first action optionally results in forwarding the control packets to a control plane of the network device, and the second action optionally results in dropping at least some of the control packets.

In accordance with another embodiment, the method optionally includes generating an additional flow key for the control packets and identifying an additional flow rate limit for the control packets based on a third policer index obtained from the first policer index and the additional flow key.

In accordance with another embodiment, the method optionally includes determining whether a flow rate of the control packets exceeds the flow rate limit identified using the second policer index, determining whether a flow rate of the control packets exceeds the additional flow rate limit identified using the third policer index, and determining whether to drop at least some of the control packets based on results from the first and second policers.

In accordance with an embodiment, a method of operating a network device includes receiving control packets, obtaining a base policer index for the control packets, with a first flow key generator, generating a first flow key for the control packets, with a second flow key generator, generating a second flow key for the control packets that is different than the first flow key, and obtaining a first policer index by combining the base policer index with the first flow key.

In accordance with another embodiment, the method optionally includes obtaining a second policer index by combining the base policer index with the second flow key.

In accordance with another embodiment, the method optionally includes: with the first policer index, identifying a first rate limit threshold; with the second policer index, identifying a second rate limit threshold; obtaining a first policer result by determining whether a flow rate of the control packets exceeds the first rate limit threshold; and obtaining a second policer result by determining whether a flow rate of the control packets exceeds the second rate limit threshold.

In accordance with another embodiment, the method optionally includes determining whether to drop at least some of the control packets based on the first and second policer results.

In accordance with an embodiment, a network device includes one or more ports configured to receive control packets, a packet forwarding subsystem configured to output a base policer index based on a networking protocol being used to transmit the control packets, a key generation subsystem configured to generate a flow key for the control packets, and a policer database that is indexed based on the base policer index and the flow key to identify a threshold value, where the policer database is configured to output a policer result indicative of whether a flow rate of the control packets exceeds the threshold value.

In accordance with another embodiment, the network device optionally includes a packet forwarding decision circuit configured to forward the control packets to a control plane of the network device when the policer result has a first value and drop at least some of the control packets when the policer result has a second value different than the first value.

The foregoing is merely illustrative and various modifications can be made to the described embodiments. The foregoing embodiments may be implemented individually or in any combination.

## Claims

1. A method of operating a network device, comprising:
receiving control packets;
identifying a first policer index for the control packets;
generating a flow key for the control packets; and
identifying a flow rate limit for the control packets based on a second policer index obtained from the first policer index and the flow key.

2. The method of claim 1, wherein identifying the first policer index for the control packets comprises:
with a protocol classifier, identifying the first policer index for the control packets based on a networking protocol with which the control packets are being transmitted to the network device.

3. The method of claim 1 or claim 2, wherein generating the flow key for the control packets comprises:
with a flow key generator, generating the flow key for the control packets based on contents of the control packets.

4. The method of claim 1 or claim 2, wherein generating the flow key for the control packets comprises:
with a flow key generator, generating the flow key for the control packets based on contents of the control packets and additional metadata associated with the control packets.

5. The method of any preceding claim, wherein generating the flow key for the control packets comprises:
with a flow key generator, generating the flow key for the control packets by performing a hash function on contents of the control packets.

6. The method of any preceding claim, wherein identifying the flow rate limit for the control packets based on the second policer index comprises:
obtaining the second policer index by combining the first policer index and the flow key.

7. The method of claim 6, wherein identifying the flow rate limit for the control packets based on the second policer index further comprises:
using the second policer index to look up, in a policer database, a corresponding entry specifying the flow rate limit for the control packets.

8. The method of claim 7, further comprising:
with the policer database, outputting a result indicating whether a flow rate of the control packets exceeds the flow rate limit.

9. The method of any preceding claim, further comprising:
determining whether a flow rate of the control packets exceeds the flow rate limit;
in response to determining that the flow rate of the control packets is less than the flow rate limit, taking a first action on the control packets; and
in response to determining that the flow rate of the control packets exceeds the flow rate limit, taking a second action on the control packets that is different than the first action.

10. The method of claim 9, wherein:
the first action comprises labeling the control packets with a first marker; and
the second action comprises labeling the control packets with a second marker different than the first marker.

11. The method of claim 9 or claim 10, wherein:
the first action results in forwarding the control packets to a control plane of the network device; and
the second action results in dropping at least some of the control packets.

12. The method of any preceding claim, further comprising:
generating an additional flow key for the control packets; and
identifying an additional flow rate limit for the control packets based on a third policer index obtained from the first policer index and the additional flow key.

13. The method of claim 12, further comprising:
determining whether a flow rate of the control packets exceeds the flow rate limit identified using the second policer index;
determining whether a flow rate of the control packets exceeds the additional flow rate limit identified using the third policer index; and
determining whether to drop at least some of the control packets based on results from the first and second policers.

14. A network device comprising:
one or more ports configured to receive control packets;
a packet forwarding subsystem configured to output a base policer index based on a networking protocol being used to transmit the control packets;
a key generation subsystem configured to generate a flow key for the control packets; and
a policer database that is indexed based on the base policer index and the flow key to identify a threshold value, wherein the policer database is configured to output a policer result indicative of whether a flow rate of the control packets exceeds the threshold value.

15. The network device of claim 14, further comprising:
a packet forwarding decision circuit configured to forward the control packets to a control plane of the network device when the policer result has a first value and drop at least some of the control packets when the policer result has a second value different than the first value.
